# EUROPÄISCHE PATENTSCHRIFT

(11) **EP 1 165 340 B1**
(45) Veröffentlichungstag und Bekanntmachung des Hinweises auf die Patenterteilung: **03.12.2003**
(21) Anmeldenummer: 00908983.0
(22) Anmeldetag: 04.02.2000
(51) Int. Cl.: B60K 41/22, F16H 63/46

(54) **VERFAHREN ZUM STEUERN EINES KRAFTFAHRZEUGANTRIEBS UND DANACH GESTEUERTER KRAFTFAHRZEUGANTRIEB**
METHOD FOR CONTROL OF A MOTOR VEHICLE DRIVE AND CORRESPONDING MOTOR VEHICLE DRIVE
PROCEDE POUR COMMANDER LE DISPOSITIF D'ENTRAINEMENT D'UN VEHICULE ET DISPOSITIF D'ENTRAINEMENT DE VEHICULE COMMANDE SELON CE PROCEDE

(43) Veröffentlichungstag der Anmeldung: 02.01.2002
(73) Patentinhaber: SIEMENS AKTIENGESELLSCHAFT, 80333 München (DE)
(72) Erfinder: PINDL, Stefan, D-85238 Petershausen (DE); MICHAU, Peter, D-93055 Regensburg (DE); NOCK, Ernst, D-93057 Regensburg (DE)
(86) Internationale Anmeldenummer: DE0000346
(87) Internationale Veröffentlichungsnummer: WO01056826

(56) Entgegenhaltungen:
- EP-A2- 0 474 107
- DE-A1- 4 011 850
- DE-C1- 19 841 856

## Beschreibung

Die Erfindung betrifft ein Verfahren nach dem Oberbegriff von Anspruch 1 und einen Kraftfahrzeugantrieb nach dem Oberbegriff von Anspruch 5. Ein solches Verfahren dient zum Steuern eines Kraftfahrzeugantriebs mit einer automatisch betätigten Kupplung, einem automatisierten Schaltgetriebe, einem Getriebeaktuator und einer elektronischen Antriebssteuerung. Außerdem ist ein solcher Kraftfahrzeugantrieb dazu vorgesehen, nach diesem Verfahren gesteuert zu werden.

Bei einem bekannten derartigen Verfahren zum Steuern einer automatisierten Reibungskupplung werden von einer übergeordneten Steuerung an einen untergeordneten Positionsregler für die Kupplung Steuersignale übermittelt werden, anhand derer eine Sollstellung eingestellt wird, und von dem untergeordneten Positionsregler wird an die übergeordnete Steuerung ein Iststellungssignal übermittelt (gattungsbildendes DE 40 11 850 A1). Dabei wird die Übertragung von Motorschwingungen auf den Antriebsstrang dadurch weitgehend ausgeschaltet, dass die Kupplung mit einem Schlupf betrieben wird. Dieser Schlupf wird in aufwendiger Weise gemessen, verglichen, geregelt und gesteuert. Damit lässt sich das Antriebsruckeln ("Getrieberasseln oder Dröhnen der Karosserie") zwar vermindern, aber der Kupplungsverschleiß wird stark erhöht.

Bei einem anderen bekannten Verfahren und zugehörigem Gerät zum Steuern einer Kraftfahrzeugkupplung soll ein plötzlicher heftiger Motorbremsruck vermieden werden, wenn sich das Getriebe in einem niedrigen Gang befindet und die Kraftstoffzufuhr unterbrochen wird (EP 0 474 107 A2). Erkennt die Steuerung einen derartigen Zustand, so öffnet sie die Kupplung.

Bekannt ist auch ein Verfahren zum Durchführen von Schaltprozeduren in einem Kraftfahrzeug-Antriebssystem mit einem automatisierten Schaltgetriebe und einer automatisch betätigten Kupplung, bei dem der Fahrer einen Schaltvorgang dadurch initiiert, dass er zum Beispiel durch Antippen eines Schalthebels einen Schaltwunsch zu erkennen gibt (DE 198 41 856 C1). Beschrieben sind die Reihenfolge und der zeitliche Ablauf des Erfassens eines Schaltwunsches, das Aktivieren des automatisierten Schaltgetriebes, das Verringern des Kupplungsmoments nach Ablauf einer Vorbereitungszeitdauer, um die Kupplung auszurücken, das Verringern des Motordrehmoments ("Abgabedrehmoment des Antriebsaggregats"), wobei das Kupplungsdrehmoment dem Motordrehmoment vorauseilend verringert wird, sowie weitere Einzelheiten eines Schaltvorgangs.

Eine präzise Umsetzung einer von der Steuerung vorgegebenen Kupplungsposition (oder auch: Kupplungslage) durch eine Kupplungspositionsregelung ist für ein hochwertiges automatisiertes Schaltgetriebe sehr wichtig. Hauptqualitätskriterien sind dabei eine nur geringe Zugkraftunterbrechung und ein Vermeiden von störendem Fahrzeugruckeln bei Schaltvorgängen.

Der Erfindung liegt die Aufgabe zugrunde, einen Kraftfahrzeugantrieb zu schaffen, der derart gesteuert wird, dass die vorstehend genannten Qualitätskriterien erfüllt werden.

Diese Aufgabe wird durch ein Verfahren zum Steuern eines Kraftfahrzeugantriebs nach Anspruch 1 und durch einen Kraftfahrzeugantrieb nach Anspruch 5 gelöst. Zweckmäßige Weiterbildungen der Erfindung sind in den Unteransprüchen niedergelegt.

Die Vorteile der Erfindung liegen insbesondere darin, dass alle Schaltvorgänge zügig und ruckfrei durchgeführt werden, und dass der dazu erforderliche Aufwand gering ist.

Ein Ausführungsbeispiel der Erfindung wird im folgenden anhand der Zeichnung erläutert. Es zeigen:
- Figur 1: einen Kraftfahrzeugantrieb mit einem automatisierten Schaltgetriebe gemäß der Erfindung;
- Figur 2: eine Blockdiagrammdarstellung der Antriebssteuerung eines Kraftfahrzeugantriebs nach Figur 1, einschließlich Hardware-, Software- und funktionstechnischen Bestandteilen;
- Figur 3: einen Kupplungsposition-Regelkreis der Steuerung nach Figur 2;
- Figur 4: und 5 zwei Diagramme zu Erläuterung einer Regelung der Kupplungsposition;
- Figur 6: eine Schnittstelle der Steuerung nach Figur 2;
- Figur 7: und 8 den zeitlichen Verlauf der Kupplungsposition bei verschiedenen Regelvorgängen;
- Figur 9: bis 12 den zeitlichen Verlauf der Kupplungsposition, der Motordrehzahl, der Getriebedrehzahl und des Motordrehmoments bei verschiedenen Betriebsweisen des Kraftfahrzeugantriebs nach Figur 1, und
- Figur 13: ein Ablaufdiagramm eines bei einem erfindungsgemäßen Verfahren abgearbeiteten Programms.

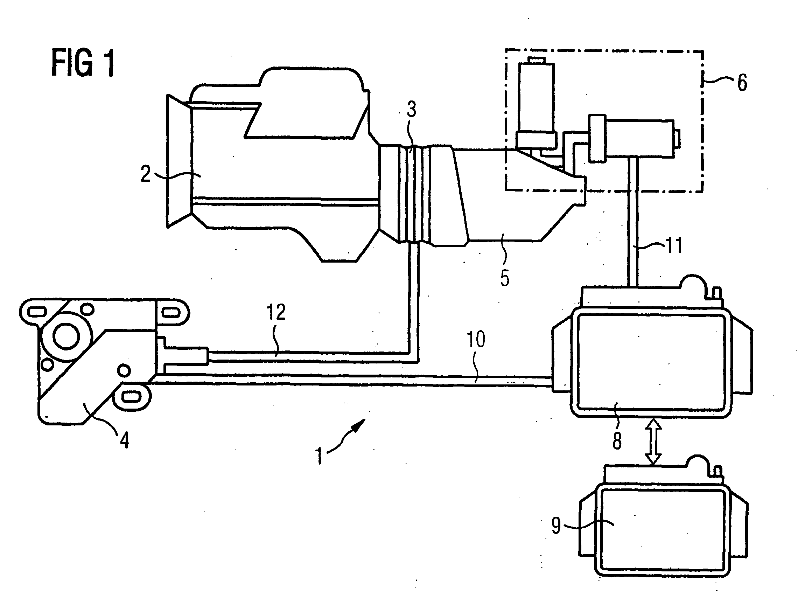

Ein Kraftfahrzeugantrieb 1 weist - soweit er für die vorliegende Erfindung von Bedeutung ist - folgende Bestandteile auf (Figur 1): einen Motor 2, eine Kupplung 3, einen Kupplungsaktuator 4, ein Schaltgetriebe 5, einen Getriebeaktuator 6, ein elektronisches Getriebesteuergerät 8 für den Kupplungsaktuator 4 und den Getriebeaktuator 6 sowie eine Motorsteuerung 9. Das Getriebesteuergerät 8 ist mit dem Kupplungsaktuator 4 durch Steuer- und Signalleitungen 10 und mit dem Getriebeaktuator 6 durch Steuer- und Signalleitungen 11 verbunden.

Der Kupplungsaktuator 4 kann als elektromotorisch angetriebener oder als hydraulisch angetriebener Aktuator ausgebildet sein. Im hier beschriebenen Ausführungsbeispiel wird ein hydraulischer Kupplungsaktuator 4 verwendet, der mit der Kupplung 3 durch eine Kraftübertragungsanordnung 12 verbunden ist, die zum Beispiel als Druckleitung ausgebildet sein kann.

Bei dem Kraftfahrzeugantrieb 1 ist in dem vorliegenden Ausführungsbeispiel das Schaltgetriebe 5 als konventionelles Handschaltgetriebe ausgebildet. Dabei wird die Kupplung 3 - durch das elektronische Getriebesteuergerät 8 gesteuert - automatisch betätigt, sobald der Fahrer an den, hier nicht dargestellten, Schalthebel greift, um einen Gangwechsel durchzuführen. Ein solches Getriebe wird als automatisches (oder auch: automatisiertes) Handschaltgetriebe ASG bezeichnet. Der erfindungsgemäße Kraftfahrzeugantrieb kann aber auch mit einem vollautomatischen Schaltgetriebe realisiert werden.

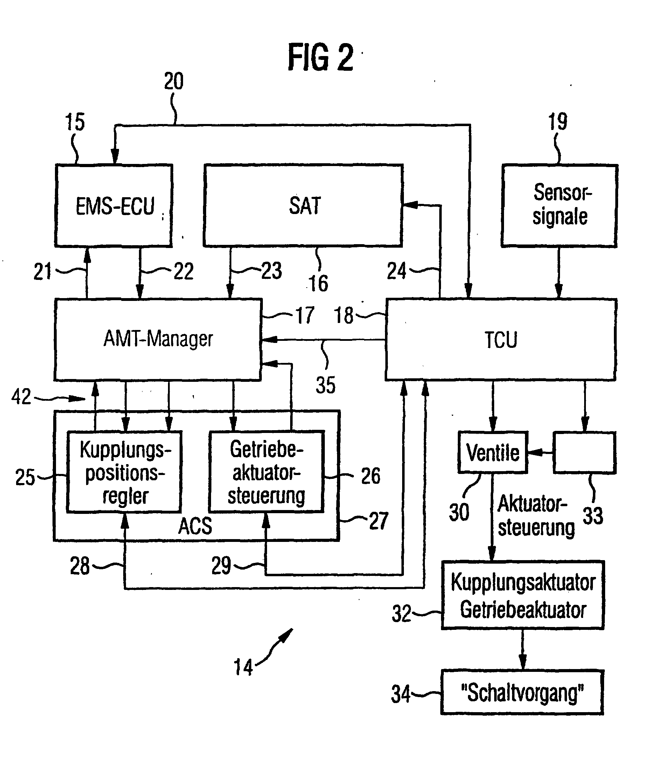

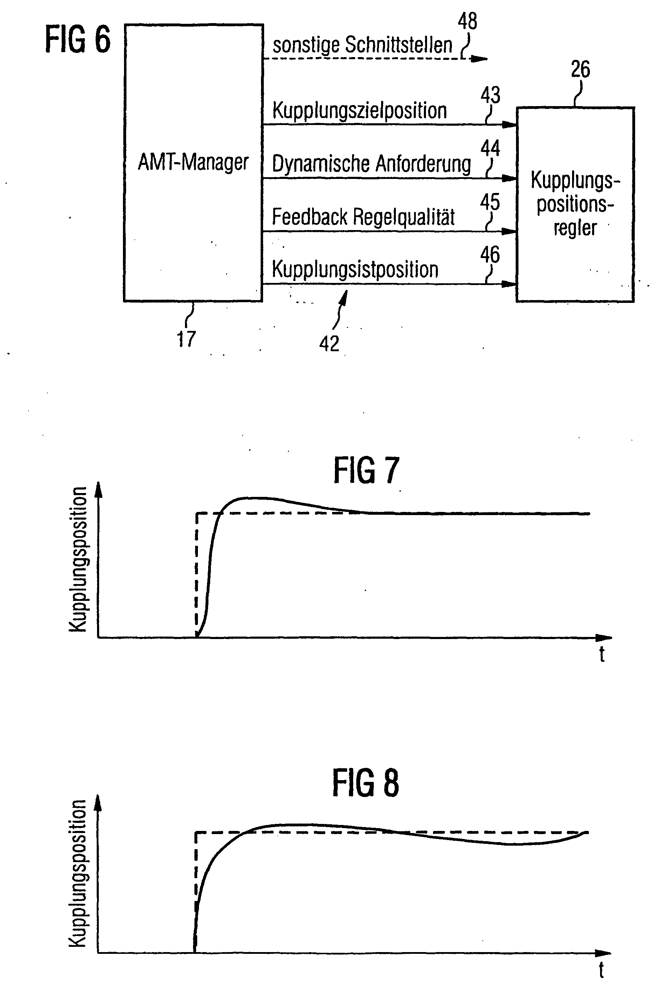

Das aus Figur 2 ersichtliche Blockdiagramm einer Antriebssteuerung 14 oder Gesamtsteuerung des Kraftfahrzeugantriebs 1 enthält eine Motorsteuerung 15, eine Schaltstrategie-Festlegungsschaltung oder Schaltstrategie-Block (SAT) 16, eine übergeordnete Steuerung (AMT-Manager) 17 und eine Getriebesteuerung (TCU) 18, die durch die Daten- und Signalleitungen (im Folgenden als Leitungen bezeichnet) 20-24 miteinander verbunden sind. Sensoren 19 liefern der Getriebesteuerung 18 Messwerte von Positionen, Drehzahlen und Drücken in der Antriebssteuerung 14. Die Leitungen 20-24 sind zum Teil als CAN-Bus realisiert. Über den CAN-Bus 20 werden Daten zwischen den Blöcken 15 und 18 ausgetauscht. Über den CAN-Bus 21 gelangen Drehmoment- und Drehzahlanforderungen von dem AMT-Manager 17 zu der Motorsteuerung 15. Der AMT-Manager 17 ist durch eine anhand von Figur 6 noch zu beschreibende leistungsfähige Schnittstelle (42) mit einem Kupplungspositionsregler 25 und einer Getriebeaktuatorsteuerung 26 verbunden.

Von dem AMT-Manager 17 werden über die Leitungen dieser Schnittstelle an den Kupplungspositionsregler 25 der Kupplungsstatus und die Zielstellung (oder Sollwert) der Kupplung 3 und an die Getriebeaktuatorsteuerung 26 der Zielgang übermittelt. An den AMT-Manager 17 gelangen von dem Kupplungspositionsregler 25 die Iststellung und von der Getriebeaktuatorsteuerung 26 der Schalt- oder Getriebestatus.

Der Schaltsträtegie-Block 16 ist eingangsseitig mit der Getriebesteuerung 18 und ausgangsseitig mit der übergeordneten Steuerung 17 verbunden. Die Getriebesteuerung 18 enthält Hardware-Schnittstellenschaltungen und ein BIOS/VIOS-Betriebssystem. Die den einzelnen Diagrammbestandteilen oder - blöcken vorstehend in Klammern hinzugefügten Abkürzungen sind Bezeichnungen, die in Programmbeschreibungen des Kraftfahrzeugantriebs verwendet werden. Sie werden der Einfachheit halber auch nachfolgend verwendet.

Der AMT-Manager 17 übernimmt die Koordination der Aktivitäten der Antriebssteuerung 14 des Kraftfahrzeugantriebs 1 bei verschiedenen Fahrsituationen wie Anfahren, Schalten, Anhalten oder Kriechen. Von der Motorsteuerung 15 fordert er über die Leitung 21 die für einen bestimmten Betriebszustand notwendigen Drehzahlen und/oder Drehmomente an. Von einer - hier nicht weiter erläuterten - automatischen Schaltzeitpunktermittlungsfunktion oder von dem Fahrer über einen mechanischen Tippschalter bekommt der AMT-Manager 17 einen Schaltwunsch mitgeteilt. Dieser Schaltwunsch wird nach der Überprüfung von Sicherheits- und Plausibilisierungsfunktionen an den Kupplungspositionsregler 25 und an die Getriebeaktuatorsteuerung 26 weitergeben, die über Datenleitungen 28 bzw. 29 mit der Getriebesteuerung 18 verbunden sind. Der Kupplungspositionsregler 25 und die Getriebeaktuatorsteuerung 26 bilden zusammen ein Aktuator-Steuersystem (ACS) 27, das in der Zeichnung durch eine gestrichelte Linie angedeutet ist.

Der Kupplungspositionsregler 25 und die Getriebeaktuatorsteuerung 26 koordinieren nun den Gangwechsel, indem sie phasengesteuert Steuerströme für elektrohydraulische Ventile 30 - die sogenannten Ventilströme - von der Getriebesteuerung 18 anfordern. Durch die Ventile 30 werden Hydraulikdrücke gesteuert, die die Kupplungs- und Getriebeaktuatoren betätigen, die in Figur 2 zu einem Aktuatorblock 32 zusammengefasst sind.

Der Kupplungspositionsregler 25 und die Getriebeaktuatorsteuerung 26 überwachen auch die Aktuator-Positionsänderungen, die durch die Steuerströme für die Ventile 30 bewirkt werden. Der durch die Ventile 30 beeinflusste Hydraulikdruck wird in einem Druckaggregat 33 erzeugt, das von der Getriebesteuerung 18 gesteuert wird. Die Aktuatoren des Blocks 32 bewirken einen Gangwechsel, indem sie hier nicht dargestellte Schaltelemente (zum Beispiel eine Schaltmuffe) in dem Schaltgetriebe 5 mit einem noch zu beschreibenden zeitlichen Ablauf betätigen. Der eigentliche Schaltvorgang in dem Getriebe ist durch einen Block 34 dargestellt.

Die Regelung der Kupplungsposition erfolgt hierzu analog. Der AMT-Manager 17 berechnet die erforderliche Kupplungsposition und übergibt den Sollwert an den Kupplungspositionsregler 25. Des weiteren wird nun noch der sogenannte Kupplungsstatus ermittelt (zum Beispiel: die Kupplung ist geschlossen, offen, blockiert, ... ). Dieser Status hängt ab von dem Berührpunkt (auch: Touchpoint) der Kupplung 3. Dieser entspricht derjenigen Kupplungsposition, bei der Drehmoment beginnt von dem Motor auf die Getriebeeingangswelle übertragen zu werden.

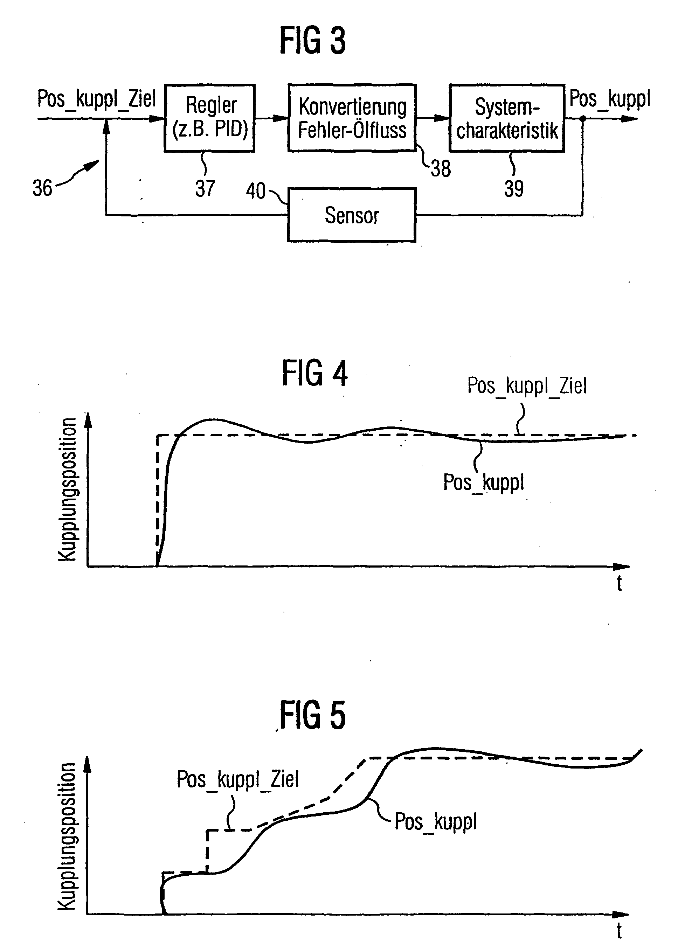

Ein Regelkreis für die Kupplungsposition 36 (Figur 3) enthält einen Regler 37, der dem Regler 25 von Figur 2 entspricht und der zum Beispiel als PID-Regler ausgebildet ist. An seinem Eingang liegt ein Sollwert der Kupplungsposition **Pos_kuppl_Ziel** an und sein Ausgangssignal wird einem Konverter 38 zugeführt. Der Konverter 38 setzt einen in dem Regler erzeugten Wert, der sich aus der Abweichung der Kupplungsposition ergibt, in einen Stellwert für den Ölfluss durch das zugehörige elektrohydraulische Ventil 30 um. Der Stellwert bewirkt in einer Regelstrecke 39 unter Berücksichtigung der Systemcharakteristik einen Istwert der Kupplungsposition **Pos_kuppl,** der von einem Sensor 40 erfasst und als Messsignal an den Eingang des Reglers 37 rückgeführt wird, wo in bekannter Weise die Abweichung Istwert minus Sollwert berechnet wird.

Die Qualität eines Regelvorganges lässt sich durch verschiedene, sich teilweise widersprechende Anforderungen beschreiben. Die zum Regeln des vorliegenden Kraftfahrzeugantriebs wichtigsten Kriterien werden nun anhand der Diagramme der Figuren 4 bis 5 erläutert.

In Figur 4 ist die Sprungantwort des Kupplungsposition-Istwerts **Pos_kuppl** auf einen höheren Sprung des Kupplungsposition-Sollwerts **Pos_kuppl_Ziel** dargestellt, d. h. auf einen Sprung der zum Beispiel größer als 10% des Gesamtweges der Kupplung ist. Wichtig für die Qualität eines Regelvorganges sind die Schnelligkeit, die Überschwingweite, die Welligkeit des Einschwingvorganges und die statische Genauigkeit der Position.

In Figur 5 ist ein typischer Regelvorgang der Kupplungsposition dargestellt: Er weist auf mehrere kleine Sprünge, mehrere ansteigende Geradenstücke mit verschiedenen Steigungen und einen stationären Endwert.

Es hat sich gezeigt, dass eine präzise Umsetzung der Sollvorgabe des AMT-Managers 17 für die Kupplungsposition durch den Kupplungspositionsregler 25 eine der wichtigsten Anforderungen an ein hochwertiges automatisiertes Schaltgetriebe darstellt. Hauptqualitätskriterien sind, dass bei Schaltvorgängen des Getriebes eine nur geringe Zugkraftunterbrechung und nur ein möglichst nicht wahrnehmbares Fahrzeugruckeln auftreten.

Die gewünschte Qualität des Kraftfahrzeugantriebs 1 beim Schalten wird mit einer Schnittstelle 42 (Figur 6) zwischen dem AMT-Manager 17 und dem Kupplungspositionsregler 25 erreicht, über die folgende Informationen oder Daten ausgetauscht werden: der AMT-Manager 17 sendet an den Kupplungspositionsregler 25 über eine Signalleitung 43 die Kupplungszielposition oder -sollwert. Über eine Signalleitung 44 sendet er Anforderungen an die Dynamik des Regelkreises hinsichtlich Schnelligkeit, Überschwingverhalten, statischer Genauigkeit und Welligkeit. Der Kupplungspositionsregler 25 ermittelt nun abhängig von diesen Vorgaben geeignete Reglerparameter. Der Kupplungspositionsregler 25 seinerseits sendet an dem AMT-Manager 17 über eine Signalleitung 46 die tatsächliche Kupplungsposition, d. h. deren Istwert.

Nach dem Regelvorgang erhält der Kupplungspositionsregler 25 vom dem AMT-Manager 17 über die Signalleitung 45 eine Rückmeldung über die Regelqualität. Der Kupplungspositionsregler 25 analysiert diese Rückmeldung (feedback) und verbessert damit durch Verändern der Reglerparameter seine Regelqualität für den nächsten ähnlichen Regelvorgang. Mit einer gestrichelten Signalleitung 48 ist die Verbindung des AMT-Managers 17 mit anderen aus Figur 2 ersichtlichen Schnittstellen angedeutet.

Der Vorteil der Schnittstelle 42 liegt insbesondere darin, dass die Kupplungspositionsregelung an unterschiedliche Fahrsituationen dynamisch individuell angepasst und damit laufend optimiert wird. Dies wird nun anhand der Figuren 7 und 8 eingehend erläutert.

Der AMT-Manager 17 gibt einen größeren Sprung der Kupplungsposition vor (Figur 7) und fordert einen sehr schnellen Regelvorgang. Der Kupplungspositionsregler 25 erreicht zwar sehr schnell die Zielposition, schwingt aber über. Der AMT-Manager stellt daraufhin fest, dass das Überschwingen die Schaltqualität sehr stark verschlechtert hat. Dies kann er anhand von Analysen verschiedener Variablen des Gesamtsystems automatisiertes Schaltgetriebe erkennen. Zum Beispiel hätte ein Überschwingen beim Anfahren an den Kupplungsberührpunkt den Einbruch der Motordrehzahl zur Folge.

Daraufhin adaptiert der AMT-Manager 17 in Verbindung mit dem Kupplungspositionsregler 25 den Regelvorgang, so dass sich damit ein Regelungsverlauf ergibt, wie er in Figur 8 dargestellt ist.

Von dem AMT-Manager 17 werden verschiedene Einkuppelbedingungen an den Kupplungspositionsregler 25 übermittelt:

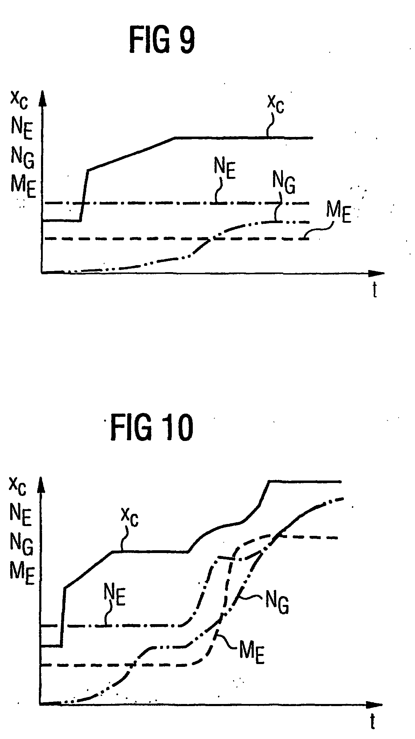

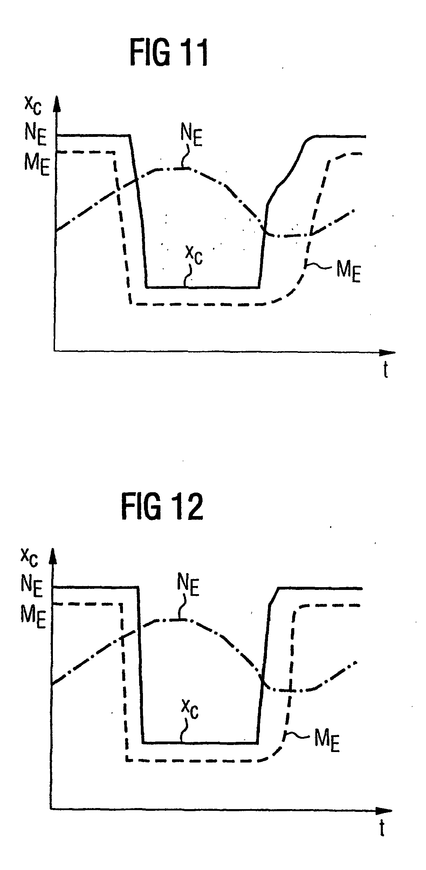

In Figur 9 ist ein Regelvorgang für die Kupplungsposition bei einer Kriechfahrt, d. h. einem sehr langsamen Fahren des Kraftfahrzeugs dargestellt. Aufgetragen sind der Verlauf der Kupplungsposition x_{c}, der Motordrehzahl N_{E}, der Getriebedrehzahl N_{G} und des Motordrehmoments M_{E} über der Zeit t. Bei einem Sprung in ein Modul "Kriechen" eines Steuerprogramms wird ein Kupplungssprung an die Nähe des Berührungspunkt (oder: Touchpoint) vorgegeben. Hierbei ist eine mäßige Dynamik (im folgenden als Priorität 2 bezeichnet) erforderlich, höchste Priorität (im folgenden als Priorität 1 bezeichnet) liegt auf der Vermeidung von Überschwingern. Anschließend ist große stationäre Genauigkeit (Priorität 1) der Kupplungslageregelung erforderlich.

In Figur 10 ist ein Regelvorgang für die Kupplungsposition bei einem Anfahren des Kraftfahrzeugs dargestellt. Es ist der zeitliche Verlauf der gleichen Größen wie in Figur 9 aufgetragen. Hier gelten folgende Bedingungen. Bei normalem Anfahren: kleine Dynamik (Priorität 3), stationäre Genauigkeit (Priorität 1). Bei schnellem Anfahren: mäßige Dynamik (Priorität 2), keine Überschwinger (Priorität 2).

In Bild 11 ist ein langsamer Schaltvorgang und in Bild 12 ein schneller Schaltvorgang dargestellt. Auch hier ist der zeitliche Verlauf der gleichen Größen wie in Figur 9 aufgetragen. Die Bedingungen dabei sind folgende.
A. Bei einem Einkuppeln am Ende des Schaltvorgangs:
   - 1. Phase, Sprung an die Nähe des Berührpunkts: hohe Dynamik (Priorität 1), keine Überschwinger (Priorität 2).
   - 2. Phase, Kupplungsregelung drehzahlgeregelt mit großen Regelabweichungen: hohe Dynamik (Priorität 1), keine Überschwinger (Priorität 2).
   - 3. Phase, Kupplungsregelung drehzahlgeregelt mit kleinen Regelabweichungen: mäßige Dynamik (Priorität 2), keine Überschwinger (Priorität 1).
   - 4. Phase, Schließen der Kupplung nach Abbau des Schlupfes über eine Zeitrampe: hohe Dynamik (Priorität 1).
B. Bei einem Auskuppeln zu Beginn des Schaltablaufs:
   - 1. Phase, Öffnen der Kupplung bis in die des Nähe Berührpunkts: hohe Dynamik (Priorität 1-2), keine Überschwinger (kleine bis mittlere Sprünge, Priorität 1).
   - 2. Phase, vollständiges Öffnen der Kupplung: hohe Dynamik (Priorität 1).

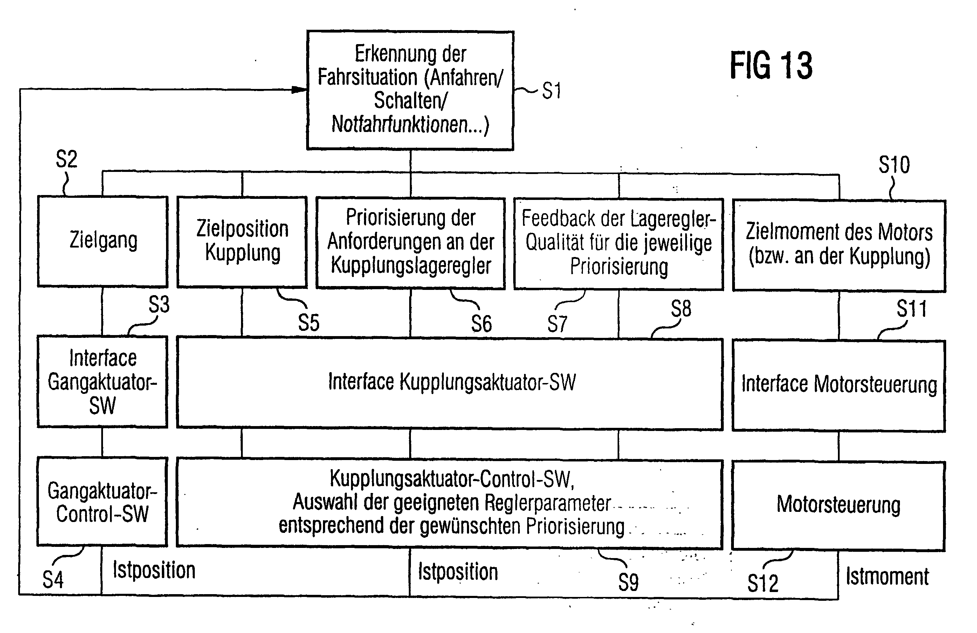

Das aus dem Ablaufdiagramm von Figur 13 ersichtliche Programm, das bei dem erfindungsgemäßen Verfahren abgearbeitet wird, weist folgende Schritte S1 bis S12 auf.
- S1:: Es erfolgt eine Erkennung der Fahrsituation, d. h. es wird festgestellt, ob ein Anfahren, ein Schalten, eine Notfahrfunktion usw. stattfindet. Dann folgen in einem ersten Programmzweig die Schritte:
- S2:: Die Getriebesteuerung berechnet den Zielgang (Sollwert).
- S3:: Der Zielgang wird an die Schnittstelle Programm-Gangaktuator übermittelt.
- S4:: Der Zielgang gelangt zu dem Steuerprogramm für den Gangaktuator und bewirkt über diesen eine neue Iststellung des Getriebegangs. Danach erfolgt ein Rücksprung zu dem Schritt S1.

- In drei parallelen Zweigen erfolgen die Schritte:
   - S5:: Es wird die Zielposition für die Kupplung ermittelt.
   - S6:: Die Prioritäten der Anforderungen an den Kupplungslageregler werden festgelegt.
   - S7:: Es wird die Rückmeldung der Qualität der Lageregelung beim Festlegen der Prioritäten berücksichtigt.
   - S8:: Die Ergebnisse der Schritte S5 bis S7 werden an die Schnittstelle Programm-Kupplungsaktuator übermittelt.
   - S9:: Die Ergebnisse der Schritte S5 bis S7 gelangen zu dem Steuerprogramm für den Kupplungsaktuator und es werden Reglerparameter, die den festgelegten Prioritäten entsprechen, ausgewählt. Damit wird eine neue Iststellung der Kupplung bewirkt, und es erfolgt ein Rücksprung zu dem Schritt S1.
- In einem weiteren parallelen Zweig erfolgen die Schritte:
   - S10:: Es wird das Zieldrehmoment des Motors (oder das Zieldrehmoment an der Kupplung) ermittelt.
   - S11:: Das Zieldrehmoment wird an die Schnittstelle ProgrammMotorsteuerung übermittelt. Damit wird
   - S12:: ein neues Istdrehmoment des Motors bewirkt, und es erfolgt ein Rücksprung zu dem Schritt S1.

Nun ist ein Programmzyklus beendet und das Programm wird erneut von Anfang an abgearbeitet.

Darüber hinaus ist es auch möglich, dass für verschiedene Einkuppelbedingungen von dem AMT-Manager 17 nur die Prioritäten für zum Beispiel Dynamik, stationäre Genauigkeit und Überschwingverhalten an das Aktuator-Steuersystem (ACS) 27 übermittelt werden.

Eine Rückmeldung von dem AMT-Manager an das Aktuator-Steuersystem 27 kann für einen Selbstlernprozeß der Antriebssteuerung 14 genutzt werden.

Möglich ist auch eine "temporäre" Korrektur (Störgröße) der Reglerparameter für die entsprechende Priorisierung. Damit kann, zum Beispiel bei einer Rückmeldung des AMT-Managers 17, dass die Dynamik zu gering ausgefallen ist, eine bewusst zu starke Regelung über eine vorgegebene Zeitspanne mit einem vorgegebenen zeitlichen Abbau durchgeführt werden, bevor anschließend der (nicht überhöhte) korrigierte Wert weiterhin verwendet wird. Für diese Zeitspanne ist dann kein erneutes Einlernen der Parameter erlaubt, um ein Überschwingverhalten durch falsches Einlernen zu vermeiden.

## Patentansprüche

1. Verfahren zum Steuern eines Kraftfahrzeugantriebs (1) mit einer automatisch betätigten Kupplung (3), einem automatischen Schaltgetriebe(5), einem Getriebeaktuator (5)und einer elektronischen Antriebssteuerung , bei dem
- von einer übergeordneten Steuerung (AMT-Manager) an einen untergeordneten Positionsregler (37) für die Kupplung Steuersignale übermittelt werden, anhand derer eine Sollstellung (Pos_kuppl_Ziel) eingestellt wird, und
- von dem untergeordneten Positionsregler an die übergeordnete Steuerung ein Iststellungssignal übermittelt wird,
**dadurch gekennzeichnet,**
- **dass** von der übergeordneten Steuerung über eine Schnittstelle (42) an den untergeordneten Positionsregler eine Rückkopplungsmeldung übermittelt wird, anhand derer von dem Positionsregler eine Optimierung der Regelqualität in Abhängigkeit von der jeweiligen Fahrsituation durchgeführt wird, und
- **dass** durch die Optimierung unterschiedliche Prioritäten (Priorität 1-3) für die Dynamik und/oder die stationäre Genauigkeit des Regelvorgangs festgelegt werden.

2. Verfahren nach Anspruch 1, **dadurch gekennzeichnet, dass** die Regelung der Kupplungsposition dynamisch individuell an die jeweilige Fahrsituation angepasst wird.

3. Verfahren nach Anspruch 1, **dadurch gekennzeichnet, dass** durch die Optimierung die zulässige Größe von Regelüberschwingern festgelegt wird.

4. Verfahren nach Anspruch 1, **dadurch gekennzeichnet, dass** die Steuervorgänge des Kraftfahrzeugantriebs bei vorgegebenen Fahrsituationen durch die übergeordnete Steuerung (AMT-Manager) koordiniert werden.

5. Kraftfahrzeugantrieb (1) mit einer automatisch betätigten Kupplung (3), einem automatischen Schaltgetriebe (5), einem Getriebeaktuator (6) und einer elektronischen Antriebssteuerung (14), die eine übergeordnete Steuerung (17) und einen untergeordneten Positionsregler (25) für die Kupplung (3) einschließt, zwischen denen Steuer- und Statussignale ausgetauscht werden, **dadurch gekennzeichnet,**
- **dass** zwischen der übergeordneten Steuerung (17) und dem untergeordneten Stellungsregler (25) eine Schnittstelle (42) vorgesehen ist, über die eine Rückkopplungsmeldung übermittelt wird, anhand derer eine Optimierung der Regelqualität in Abhängigkeit von der jeweiligen Fahrsituation erfolgt, und
- **dass** durch die Optimierung unterschiedliche Prioritäten (Priorität 1-3) für die Dynamik und/oder die stationäre Genauigkeit des Regelvorgangs festgelegt werden.

6. Kraftfahrzeugantrieb nach Anspruch 5, **dadurch gekennzeichnet, dass** sie ein Aktuator-Steuersystem (27) enthält, das einerseits über die Schnittstelle (42) mit der übergeordneten Steuerung (17) und andererseits über Datenleitungen (28, 29) mit einer Getriebesteuerung (18) verbunden ist.

7. Kraftfahrzeugantrieb nach Anspruch 5, **dadurch gekennzeichnet, dass** sie eine Schaltstrategie-Festlegungsschaltung (16) enthält, die eingangsseitig mit der Getriebesteuerung (18) und ausgangsseitig mit der übergeordneten Steuerung (17) verbunden ist.

## Claims

1. Method of controlling a motor vehicle transmission (1) with an automatically operated clutch (3), an automatic gearbox (5), a transmission actuator (5) and an electronic transmission controller, in which
- a higher-ranking controller (AMT Manager) transfers control signals to a lower-ranking position regulator (37) for the clutch, on the basis of which a required setting (Pos_kuppl_Ziel) is set and
- an actual setting signal is transferred from the lower-ranking position regulator to the higher-ranking control,
**characterised in that**
- a feedback message is transferred from the higher-ranking controller via an interface (42) to the lower-ranking position regulator, on the basis of which an optimisation of the regulation quality is undertaken by the position regulator depending on the relevant driving situation, and
- that through the optimisation, different priorities (priority 1-3) are defmed for the dynamics and/or the stationary accuracy of the regulation process.

2. Method in accordance with Claim 1, **characterised in that** the regulation of the clutch position is dynamically adapted individually to the relevant driving situation.

3. Method in accordance with Claim 1, **characterised in that** the optimisation defines the permitted size of regulation overshooters.

4. Method in accordance with Claim 1, **characterised in that** the control processes of the motor vehicle transmission are coordinated in a prespecified driving situation by the higher-ranking controller (AMT Manager).

5. Motor vehicle transmission (1) with an automatically operated clutch (3), an automatic gearbox (5), a transmission actuator (5) and an electronic transmission controller (14), which includes a higher-ranking controller (17) and a lower-ranking position regulator (25) for the clutch (3), between which control and status signals are exchanged,
**characterised in that**
- between the higher-ranking controller (17) and the lower-ranking position regulator (25) an interface (42) is provided, via which a feedback message is transferred, on the basis of which an optimisation of the regulation quality is undertaken depending on the relevant driving situation, and
- that through the optimisation, different priorities (priority 1-3) are defined for the dynamics and/or the stationary accuracy of the regulation process.

6. Motor vehicle transmission in accordance with Claim 5, **characterised in that** it includes an actuator control system (27) which is connected on one side via the interface (42) to the higher-ranking controller (17) and on the other side via data lines (28, 29) to a transmission controller (18).

7. Motor vehicle transmission in accordance with Claim 5, **characterised in that** it includes a shift strategy definition circuit (16), which is linked on the input side to the transmission controller (18) and on the output side to the higher-ranking controller (17).

## Revendications

1. Procédé pour commander un entraînement (1) de véhicule automobile, comportant un embrayage automatique (3), une boîte de vitesses automatique (5), un actionneur (6) de boîte de vitesses, et une commande électronique d'entraînement, dans lequel
- des signaux de commande à l'aide desquels une position de consigne (Pos_kuppl_Ziel) est réglée, sont transmis par une commande maître (gestionnaire AMT) à un régulateur de position subordonné (37) de l'embrayage, et
- un signal de position effective est transmis par le régulateur de position subordonné à la commande maître,
**caractérisé en ce**
- **qu'**un message de rétroaction est transmis par la commande maître au régulateur de position subordonné à travers une interface (42), le régulateur de position effectuant à l'aide de ce message une optimisation de la qualité de réglage en fonction de chaque situation de conduite, et
- **que** des priorités différentes (priorités 1-3) pour la dynamique et/ou la précision stationnaire du processus de réglage sont déterminées par l'optimisation.

2. Procédé selon la revendication 1, **caractérisé en ce que** le réglage de la position de l'embrayage est adapté de manière dynamique individuellement à chaque situation de conduite.

3. Procédé selon la revendication 1, **caractérisé en ce que** la valeur admissible des suroscillations de régulation est fixée par l'optimisation.

4. Procédé selon la revendication 1, **caractérisé en ce que** les processus de commande de l'entraînement de véhicule automobile sont coordonnés dans des situations prédéterminées de conduite par la commande maître (gestionnaire AMT).

5. Entraînement (1 ) de véhicule automobile, comportant un embrayage automatique (3), une boîte de vitesses automatique (5), un actionneur (6) de boîte de vitesses, et une commande électronique (14) d'entraînement qui comprend une commande maître (17) et un régulateur de position subordonné (25) de l'embrayage (3), des signaux de commande et d'état étant échangés entre ces derniers, **caractérisé en ce**
- **qu'**une interface (42) est prévue entre la commande maître (17) et le régulateur de position subordonné (25), interface par laquelle un message de rétroaction est transmis à l'aide duquel une optimisation de la qualité de réglage est effectuée en fonction de chaque situation de conduite, et
- **que** des priorités différentes (priorités 1-3) pour la dynamique et/ou la précision stationnaire du processus de réglage sont déterminées par l'optimisation.

6. Entraînement de véhicule automobile selon la revendication 5, **caractérisé en ce qu'**il comprend un système de commande d'actionneur (27) qui est relié par l'interface (42) à la commande maître (17), d'une part, et par des lignes de données (28, 29) à une commande (18) de boîte de vitesses, d'autre part.

7. Entraînement de véhicule automobile selon la revendication 5, **caractérisé en ce qu'**il comprend un circuit (16) de détermination de stratégie de changement de vitesses dont l'entrée est reliée à la commande (18) de boîte de vitesses et dont la sortie est connectée à la commande maître (17).
